# EUROPÄISCHE PATENTANMELDUNG

(11) **EP 2 036 714 A1**
(43) Veröffentlichungstag der Anmeldung: **18.03.2009**
(21) Anmeldenummer: 08014490.0
(22) Anmeldetag: 14.08.2008
(51) Int. Cl.: B32B 17/06, E06B 3/663, E06B 3/67, E06B 9/24, G02F 1/13, G02F 1/15

(54) **Element mit einem Schutzglas gegen ionisierende Strahlung**

(30) Priorität: 06.09.2007 DE 102007042244; 19.02.2008 DE 102008009777; 19.02.2008 DE 102008009774; 19.02.2008 DE 102008009776
(71) Anmelder: Schott AG, 55122 Mainz (DE)
(72) Erfinder: Albrecht, Bernd, 31073 Delligsen (DE); Grimm, Daniel, 55271 Stadecken-Eisheim (DE); Ullmann, Angelika, Dr., 31863 Coppenbrügge (DE); Walther, Marten, Dr., 31061 Alfeld (DE); Düsing, Ernst- Friedrich, 31061 Alfeld (DE); Schillert, Horst, 31073 Grünenplan (DE); Anton, Matthias, 37574 Einbeck (DE); Kracht, Peter, 37603 Holzminden (DE); Reimann, Stephan, 31073 Grünenplan (DE); Buchner-Nagel, Susanne, 31073 Kaierde (DE)
(74) Vertreter: Sawodny, Michael-Wolfgang

(57) **Zusammenfassung**

Die Erfindung betrifft ein Element, insbesondere transparentes Element, umfassend wenigstens ein Glaselement, das als Schutzglas gegen ionisierende Strahlung und/oder UV-Strahlung ausgebildet ist, wobei wenigstens ein Teil der Fläche des Glaselementes von einer Folie überdeckt wird, die einen Stoff umfasst, der in wenigstens zwei Zustände schaltbar ist.

## Beschreibung

Die Erfindung betrifft ein Element, insbesondere ein transparentes Element, das wenigstens ein Glaselement, das als Schutzglas gegen ionisierende Strahlung und/oder UV-Strahlung ausgebildet ist, umfasst.

Aus dem Stand der Technik, beispielsweise aus Schott AG-Online Magazin-Info 96-Röntgenschutzglas auf der Homepage:
http://www.Schott.com/magazine/German/Info96
und der Homepage der Firma Glastech Rosenheim-Rosenheimer Glastechnik GmbH, Neue Straße 9, 83071 Stephanskirchen, sind Röntgenschutzgläser bekannt geworden. Diesbezüglich wird auf die Homepage
http://www.glastech.com/de/Röntgenschutzglas.php
verwiesen. Röntgenschutzgläser, beispielsweise vom Typ RD 50 und RD 30 der Schott AG in Mainz, werden als Schutzgläser gegen ionisierende Strahlung wie Röntgen- und Gammastrahlung eingesetzt. Die Röntgenschutzgläser RD 50 und RD30 zeichnen sich durch einen hohen Bleioxidgehalt von mehr als 65 Gewichtsprozent bzw. mehr als 22 Gewichtsprozent aus.

Insbesondere finden derartige Röntgenschutzgläser in Kliniken Verwendung. Die zuvor genannten Strahlenschutzgläser werden insbesondere dazu eingesetzt, eine Überwachung des Röntgenraumes von außen her zu ermöglichen. Anwendung finden diese Gläser des Weiteren auch in Operationssälen, Bestrahlungsstationen, Zahnarztpraxen, Labors und der Materialprüfung. Beispiele für derartige Anwendungen sind Sicht- und Durchsprechfenster, Türverglasungen, Panoramaverglasungen, mobile Strahlenschutzwände oder Schutzscheiben für Untersucherschutzsysteme. Auch eine Verwendung in Mammographiegeräten ist möglich.

Um Sichtschutz bei der Verwendung derartiger Gläser zu ermöglichen, war es im Stand der Technik bislang notwendig, in einem Scheibenzwischenraum, beispielsweise in einem Isolierglasverbund oder vor dem Glas eine separate mechanische Sichtschutzeinrichtung anzuordnen. Eine derartige Einrichtung hatte den Nachteil einer sehr aufwendigen Herstellung. Des Weiteren war ein derartiges System stets sehr wartungsintensiv.

Aufgabe der Erfindung ist es somit, die Nachteile des Standes der Technik zu vermeiden, insbesondere sollen Elemente, insbesondere transparente Elemente angegeben werden, die zum einen einen Schutz vor ionisierender Strahlung bieten, zum anderen ohne aufwendige weitere Einrichtung einen ausreichenden Sichtschutz bietet.

Erfindungsgemäß wird diese Aufgabe dadurch gelöst, dass bei einem Glaselement, das als Schutzglas gegen ionisierende Strahlung und/oder UV-Strahlung ausgebildet ist, wenigstens einen Teil der Fläche des Glaselementes von einer Folie überdeckt wird, die einen Stoff umfasst, der in wenigstens zwei Zustände schaltbar ist, einen transparenten Zustand und einen weitgehend intransparenten Zustand. Durch einen derartigen Aufbau ist es nicht mehr notwendig, um den Durchblick durch eine transparente Schutzglasscheibe zu verhindern, diese mit einer separaten Einrichtung beispielsweise einer Jalousie zu versehen, die geöffnet und geschlossen werden kann.

Bei dem Glaselement, das als Schutzglas gegen ionisierende Strahlung und/oder UV-Strahlung ausgebildet ist, handelt es sich bevorzugt um ein Röntgenschutzglas mit einem sehr hohen Bleigehalt von mehr als 20 Gew.-%, insbesondere mehr als 50 Gew.-%, bevorzugt mehr als 60 Gew.-%, ganz besonders bevorzugt mehr als 65 Gew.-%, insbesondere mehr als 70 Gew.-% an Blei. Derartige Röntgenschutzgläser weisen dann eine sehr hohe Absorption für die ionisierende Strahlung auf und eine hohe Transmission für sichtbares Licht auf. Beispielsweise beträgt der Lichttransmissionsgrad des Röntgenschutzglases RD 30 der Schott AG Mainz mit einem Bleigehalt ≥ 22 Gew.-% bei einer Dicke von 6 mm 90,5 % und der Lichttransmissionsgrad für sichtbares Licht des Röntgenschutzglases RD 50 mit einem Bleigehalt ≥ 65 Gew.-% bei einer Dicke von 5 mm 85 %.

Bevorzugt wird das als Schutzglas gegen ionisierende Strahlung ausgebildete Glaselement als Monoscheibe angefertigt. Die Dicke der Monoscheiben für die Schutzgläser beträgt bevorzugt zwischen 4 und 25 mm, mehr bevorzugt zwischen 4 und 10 mm. Im Bereich einer Röntgenspannung von 40 kV - 200 kV einer Röntgenröhre weist das Röntgenschutzglas einen Bleigleichwert von 0,5 mm - 7 mm auf. Unter einem Bleigleichwert wird die Dicke einer Bleiplatte verstanden, die eine äquivalente Schutzwirkung wie das Schutzglas entfaltet. Um höhere Schutzwirkungen für Bleigleichwerte zu erreichen, können selbstverständlich die Monoscheiben mit einer Dicke von 4 - 25 mm zu Glasverbünden aus mehreren Scheiben zusammengesetzt werden. Die Schutzwirkung steigt dann entsprechend. Als Stoff, der zwischen zwei Zuständen leicht schaltbar ist, nämlich einem transparenten und einem intransparenten Zustand, wird bevorzugt ein flüssigkristallines Material eingesetzt.

Als flüssigkristalline Materialien bezeichnet man Materialien beziehungsweise Substanzen, die einerseits flüssig, andererseits aber auch richtungsabhängige physikalische Eigenschaften aufweisen analog einem Kristall. Die Voraussetzung für die Ausbildung von flüssigkristallinen Phasen ist die Anisotropie der sie ausbildenden Baueinheiten. Flüssigkristalle können beispielsweise eine stäbchenförmige Molekülgestalt aufweisen. Betreffen Flüssigkristalle wird auf den Artikel "Flüssigkristalle im Überblick: Unentbehrlich in Natur, Technik und Forschung, in: Physik in unserer Zeit 34, Nr. 3, 2003, S. 134 - 135 verwiesen. Der Offenbarungsgehalt dieser Schrift wird in vorliegende Anmeldung vollumfänglich mit eingeschlossen.

In einer ersten Ausgestaltung der Erfindung kann eine schaltbare Folie mit winzigen Flüssigkristallen beschichtet sein. Die Flüssigkristalle der Folie sind zunächst völlig ungeordnet, was dazu führt, dass die Folie in Transmission trüb erscheint. Die einzelnen Flüssigkristalle sind in einem derartigen Fall Streuzentren.

Durch Anlegen einer Spannung an Elektroden können die sehr kleinen Flüssigkristalle geordnet werden. Es findet ein Phasenübergang von einer ungeordneten Phase in eine geordnete Phase aufgrund von Zuführen von Energie, hier elektrischer Energie, statt. Dadurch, dass sich die kleinen Kristalle ordnen, wird die im ungeordneten Zustand in Transmission trübe Folie im Bereich der sichtbaren Wellenlängen, das heißt von 380 nm - 780 nm, insbesondere von 420 nm - 780 nm, transparent. Um die Folie wieder vom geordneten transparenten Zustand in einen ungeordneten Zustand zu schalten, wird die Spannung von den Elektroden genommen. Die Folie erscheint dann wieder milchig und trüb. Alternativ zu einer mit Flüssigkristallen beschichteten Folie ist es auch möglich, einen Aufbau zu wählen, bei dem eine Polymermatrix mit Flüssigkristallen zwischen zwei Polyesterfolien eingebracht ist. Die beiden Polyesterfolien sind transparent und elektrisch leitfähig beschichtet. Der Sandwichaufbau aus zwei elektrisch leitfähig beschichteten Polyesterfolien und einer dazwischen liegenden Polymermatrix mit Flüssigkristallen kann als Flüssigkristall-Packaging bezeichnet werden. Der Lichttransmissionsgrad im Bereich des sichtbaren Lichtes eines derartigen Flüssigkristall-Packaging liegt im Bereich von mehr als 70 % für sichtbares Licht und den transparenten, d.h. den geordneten Zustand und weniger als 65 % für sichtbares Licht für den opaken, d.h. den ungeordneten Zustand.

Zusätzlich oder anstelle der Polyesterfolien können auch Polarisationsfolien eingesetzt werden. Die flüssig-kristalline Substanz, die sich zwischen den Polarisationsfolien befindet, wird dann von einem Polarisationszustand in einen anderen umgeschaltet. Je nachdem, wie die Polarisationsfolien zu dem im jeweiligen Polarisationszustand befindlichem Flüssigkristall stehen, erscheint die transparente Substanz transparent oder nicht transparent.

Das Umschalten von einem Zustand auf den anderen erfolgt unter geringer Energieaufnahme.

In einer ersten Ausführungsform der Erfindung kann die Stromzufuhr zu den schaltbaren Folien über Stromsammelschienen am Scheibenrand erfolgen.

Alternativ wäre es auch möglich, das Glaselement, das die Folie wenigstens teilweise überdeckt, mit einer elektrisch leitfähigen Schicht zu beschichten, beispielsweise mit einer transparenten Beschichtung. Hier kämen insbesondere Beschichtungen mit Metalloxiden wie ITO (InOₓ: Sn), SnOₓ: F, SnOₓ: Sb, ZnOₓ: Ga, ZnOₓ: B, ZnOₓ: F, ZnOₓ: Al, Ag/TiOₓ in Betracht.

Die Metalloxide der oben genannten Art sind transparent, und stören insoweit im sichtbaren Wellenlängenbereich die Transmission der Scheibe nicht. Möchte man nicht die gesamte Scheibe schalten sondern Bereiche, so ist es möglich, derartige Schichten beispielsweise mit einem Laser zu strukturieren. Die Umschaltung kann dann in den gewünschten Bereichen durch Anlegen von Strom in diesen Bereichen erfolgen.

Bevorzugt ist die schaltbare Folie, die Flüssigkristalle umfasst, zwischen mindestens zwei Glasscheiben eingearbeitet. Demgemäß umfasst in einer bevorzugten Ausführungsform das Element gemäß der Erfindung nicht nur das Glaselement, das als Schutzglas gegen ionisierende Strahlung und/oder UV-Strahlung ausgebildet ist, sondern auch ein weiteres Glaselement, wobei die Folie zwischen dem Glaselement, das als Schutzglas ausgebildet ist und dem weiteren Glaselement eingebracht sein kann, ergebend ein Verbundglaselement.

Das weitere Glaselement kann ein Schutzglas sein, das gegen ionisierende Strahlung eingesetzt wird, muss es aber nicht. Selbstverständlich können als weiteres Glaselement in dem Verbund jede Art von Glasscheiben eingesetzt werden, je nach dem Einsatzzweck der Verbundglasscheibe. So ist es möglich, ganz normales Flachglas zu verwenden, oder eine hochentspiegelte Monoscheibe, wie beispielsweise eine entspiegelte Monoscheibe Amiran^{®} der Schott AG Mainz. Bei einer entspiegelten Monoscheibe ist die Flachglasscheibe mit einer Interferenzschicht versehen, die lediglich eine Restreflektion von ca. 1% aufweist und daher gegenüber nicht entspiegelten Gläsern die Reflektion auf 1/8 reduziert. Auch ist es möglich, das Schutzglas gegen ionisierende Strahlung mit einer Entspiegelungsbeschichtung zu versehen.

Als weiteres Glas im Verbund kann ein beliebiges Glas, bspw. auch ein Glas mit integriertem UV-Schutz oder ein Wärmeschutzglas mit einer Wärmeschutzbeschichtung eingesetzt werden. Auch ein Einscheibensicherheitsglas als weiteres Glaselement ist möglich wie auch ein Verbundsicherheitsglas. Die Glasscheibe muss nicht flach vorliegen, sondern kann selbstverständlich auch gebogen sein. Das Glas des weiteren Glaselementes kann thermisch vorgespannt oder siebbedruckbar sein. Alternativ zu einem entspiegelten Glas könnte aber auch ein Farbeffektglas als weiteres Glas, beispielsweise ein Farbeffektglas auf Basis von optischen Interferenzschichten wie das Glas Narima^{®} der Schott AG verwendet werden. Neben Farbeffektgläsern auf Basis von interferenzoptischen Effekten können auch durchgefärbte Farbgläser wie die Gläser Artista^{®} der Schott AG mit einer einseitig strukturierten Oberfläche oder durchgefärbte Gläser wie das Glas Imera^{®} mit strukturloser Oberfläche sowie hochtransparente farblose Flachgläser mit strukturierter Oberfläche Verwendung finden.

Wie zuvor beschrieben, kann das weitere Glaselement mit einer elektrisch leitenden Beschichtung, beispielsweise einer Metalloxidbeschichtung, beschichtet sein, die transparent ist, wie beispielsweise eine ITO (InOₓ: Sn), SnOₓ: F, SnOₓ: Sb, ZnOₓ: Ga, ZnOₓ: B, ZnOₓ: F, ZnOₓ: Al, Ag/TiOₓ -Schicht. Werden an diese Schichten Spannungen angelegt, so können die die Flüssigkristalle in der Folie von einem Ordnungszustand in einen anderen umgeschaltet werden. Die Flüssigkristallfolie kann somit von einem streuenden, das heißt einem trüben Zustand, in einen transparenten, das heißt einen transmissiven Zustand umgeschaltet werden und umgekehrt. Die Flüssigkristalle können insbesondere auch in eine Polymermatrix schaltbar eingebracht sein.

Das Glaselement, das als Schutzglas gegen ionisierende Strahlung und/oder UV-Strahlung ausgebildet ist, kann auch Teil eines Isolierglaselementes sein. Das Isolierglaselement umfasst, beispielsweise eine Monoscheibe, die als Schutzglas gegen ionisierende Strahlung und/oder UV-Strahlung ausgebildet ist und ein auf der gegenüberliegenden Seite des Isolierglasverbundes angeordnetes Glaselement, beispielsweise ein Verbundglaselement, in das eine Folie mit Flüssigkristallen einlaminiert ist, umfassen. Auch eine derartige Anordnung entspricht dem Gedanken der Erfindung, da auch bei einer derartigen Anordnung durch den festen Abstand zwischen dem Glaselement, das als Schutzglas gegen ionisierende Strahlung und/oder UV-Strahlung ausgebildet ist und dem gegenüberliegenden Verbundglaselement, das die schaltbare Folie umfasst, wenigstens ein Teil des Glaselementes, das als Schutzglas gegen ionisierende Strahlung und/oder UV-Strahlung ausgebildet ist, zumindest teilweise überdeckt wird. Das Glaselement, das im Isolierglasverbund zu dem Glaselement, das als Schutzglas gegen ionisierende Strahlung ausgebildet ist, beabstandet ist, kann wiederum eine Vielzahl von Möglichkeiten umfassen. Beispielsweise kann das beabstandete Glaselement eine Monoscheibe, eine entspiegelte Scheibe, eine Verbundglasscheibe, eine Dekorglasscheibe, ein Farbeffektglas, ein Wärmeschutzglas oder ein Sonnenschutzglas umfassen. Der Abstand zwischen dem wenigstens einen Element und der beabstandet hierzu angeordneten hierzu weiteren Glasscheibe beträgt bevorzugt 5 mm bis 50 mm, bevorzugt 10 mm bis 30 mm.

Bei einem Isolierglaselement ist zwischen die beiden Scheiben ein Füllgas eingebracht, beispielsweise ein Edelgas wie Argon mit einem Gasfüllgrad beispielsweise von 95%.

Das erfindungsgemäße Element kann beispielsweise in Röntgenräumen, Operationssälen, Bestrahlungsstationen, Zahnarztpraxen und Labors in der Materialprüfung eingesetzt werden. Die Elemente können als Sicht- und Durchsprechfenster, Türverglasung, Panoramaverglasung, mobiler Strahlenschutzscheibe, Schutzscheibe für Untersuchungssysteme, eingebaut beispielsweise in Mammographiegeräte und als Sichtscheiben für Schutzbrillen verwendet werden.

Nachfolgend soll die Erfindung anhand eines Ausführungsbeispiels ohne Beschränkung hierauf beschrieben werden.

Es zeigen:
- Figur 1a-1b.3: den prinzipiellen Aufbau eines erfindungsgemäßen Elementes;
- Figur: den Aufbau eines erfindungsgemäßen Elementes, ausgelegt als Verbundglas;
- Figur 3: den Aufbau eines erfindungsgemäßen Elementes als Isolierglasverbund;
- Figur 4: den Einsatz eines erfindungsgemäßen Elementes als Verbundglas in einem Isolierglaselement.

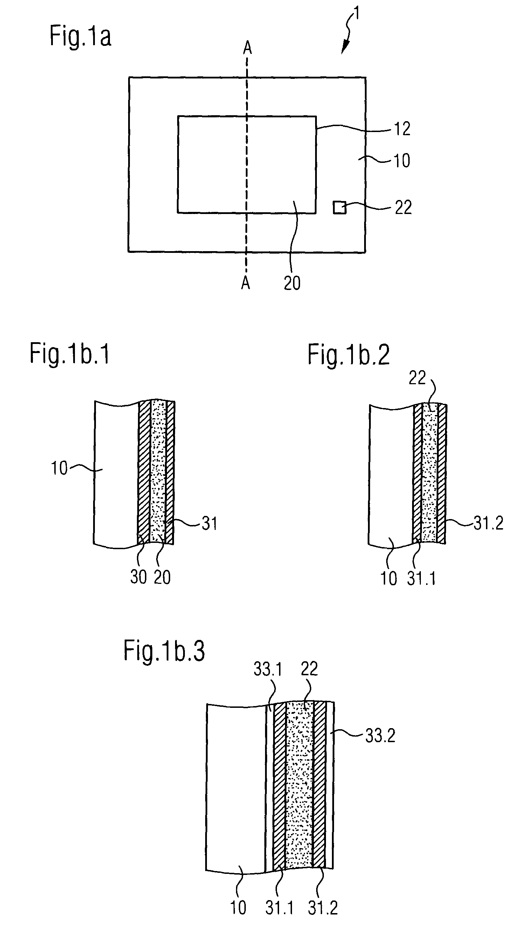

Fig. 1a zeigt eine Draufsicht auf ein erfindungsgemäßes Element 1. Das erfindungsgemäße Element ist als Scheibe ausgebildet. Auf das Glaselement 10 ist im Bereich 12 eine Folie 20, die Flüssigkristalle enthält, aufgebracht. Die Scheibe wird damit teilweise von der Folie überdeckt.

In Figur 1b.1 ist eine Ausgestaltung eines erfindungsgemäßen Elementes 1 im Schnitt entlang der Linie A-A in Figur 1a dargestellt. Das Glaselement 10 ist als Schutzglas gegen ionisierende Strahlung und/oder UV-Strahlung ausgebildet. Bei dem Glaselement 10 handelt es sich bevorzugt um ein sogenanntes Röntgenschutzglas, beispielsweise das Röntgenschutzglas vom Typ RD 50 oder RD 30 der Schott AG, Mainz, das Schutz gegen ionisierende Röntgen- und Gammastrahlung bietet. Mit einem derartigen Glas lassen sich Bleigleichwerte, die das Äquivalent der Schutzwirkung des Glases einer Bleiplatte gleicher Dicke beschreiben von 0,5 mm Pb - 8 mm Pb abhängig von der Röhrenspannung der die Röntgenstrahlung erzeugenden Hochspannungsröhre erzielen. Die Glasdicken derartiger Röntgenschutzgläser liegen im Bereich zwischen 4 mm und 25 mm, bevorzugt zwischen 5,0 und 22,0 mm.

In einer ersten Ausgestaltung der Erfindung gemäß Figur 1b.1 kann zumindest ein Teil des Röntgenschutzglases 10 mit einer Folie 20 überdeckt sein, die beispielsweise mit winzigen Flüssigkristallen beschichtet ist. In einem Anfangszustand sind diese Flüssigkristalle bei Zimmertemperatur völlig ungeordnet, was dazu führt, dass die Folie in Transmission trüb wirkt.

Um die Folie 20 in einen transparenten Zustand zu schalten, wird diese mit einer Spannung versorgt, so dass sich die Flüssigkristalle ordnen. Dies kann beispielsweise dadurch geschehen, dass die Röntgenschutzglasscheibe 10 mit einer transparenten, leitfähigen Beschichtung, wie beispielsweise einer Metalloxidsbeschichtung 30 versehen ist und die Folie 20 auf der der gegenüberliegenden Seite angeordneten Folie 31 mit leitfähiger Beschichtung, bspw. einer Polyesterfolie mit leitfähiger Beschichtung eingeschlossen wird. Die Metalloxidschichten sind bevorzugt Schichten einer oder mehrerer der nachfolgenden Metalloxide:
InOₓ: Sn
SnOₓ: F
SnOₓ: Sb
ZnOₓ: Ga
ZnOₓ: B
ZnOₓ: F
ZnOₓ Al
Ag/TiOₓ

Die Metalloxide werden beispielsweise mit Hilfe von Tauchtechniken vollflächig beschichtet, beispielsweise im Sol-Gel-Verfahren. Die Metalloxidschichten können dann, insbesondere, wenn nicht der gesamte Bereich der Glasscheibe vollflächig geschaltet werden soll, strukturiert werden, beispielsweise mittels Laser. Der Laser erhitzt die Beschichtung lokal und verdampft diese. Bevorzugt sind die leitfähigen Schichten derartig ausgebildet, dass sie im Bereich der Laserwellenlänge des eingesetzten Lasers eine hohe Absorption aufweisen, wohingegen das Substrat, hier das Schutzglas, bei diesen Wellenlängen transmissiv ist. Bei einem derartigen System ist dann sichergestellt, dass die Glasschicht, auf die die transparente leitfähige Schicht aufgebracht ist, nur geringe Verletzungen bei der Strukturierung aufweist und Rissbildung bei derartigen Systemen weitgehend vermieden wird.

Bevorzugt handelt es sich bei den leitfähigen Beschichtungen um sogenannte hochleitfähige Beschichtungen mit einem Widerstand R_{□} ≤ 15 Ohms/□, insbesondere ≤ 10 Ohms/□, insbesondere ≤ 9 Ohms/□, insbesondere □ 7 Ohms/□, insbesondere □ 5 Ohms/□. Die Schichtdicke der transparenten, insbesondere der hochleitenden Beschichtungen beträgt bevorzugt mehr als 150 nm, bevorzugt mehr als 180 nm, insbesondere bevorzugt mehr als 280 nm, insbesondere bevorzugt mehr als 500 nm, ganz besonders bevorzugt mehr 550 nm.

Wird nunmehr zwischen die Metalloxidschicht 30 und die leitfähige Folie 31 mit leitfähiger Beschichtung eine Spannung angelegt, so orientieren sich aufgrund der angelegten Spannung die Flüssigkristalle der Folie 20. Die Folie 20 erscheint nunmehr transparent.

In einer zweiten Ausgestaltung der Erfindung gemäß Fig. 1b.2 ist der Flüssigkristall in eine Polymermatrix 22 eingebracht. Die Polymermatrix 22 mit dem Flüssigkristall befindet sich zwischen zwei Folien 31.1, 31.2 mit einer elektrisch leitenden Beschichtung. Beispielsweise können dies Polyesterfolien mit einer elektrisch leitenden Beschichtung sein. Durch Anlegung einer Spannung an den durch die elektrisch leitende Beschichtung ausgebildeten Elektroden können die in der Polymermatrix befindlichen Flüssigkristalle von einem ungeordneten, intransparenten Zustand in einen geordneten, transparenten Zustand überführt werden.

Wird die Spannung von den Elektroden, d.h. den leitfähigen Beschichtungen, zwischen denen die Polymermatrix 22 mit dem Flüssigkristall angeordnet ist, genommen, so gehen die Flüsssigkristalle wieder in einen ungeordneten Zustand über, und die Scheibe erscheint trüb.

In Figur 1b.3 ist eine weitere Ausgestaltung der Erfindung gezeigt. Bei der Figur 1b.3 ist wiederum ein Flüssigkristall in eine Polymermatrix 22 eingebettet. Das im Polymermatrix enthaltene Flüssigkristall 22 ist zwischen zwei Folien mit leitfähiger Beschichtung 31.1, 31.2, beispielsweise Polyesterfolien, eingebracht. Die beiden Folien 31.1, 31.2 dienen als Elektroden. Zusätzlich befindet sich auf jeder der beiden als Elektroden dienenden Folien 31.1, 31.2 Polarisationsfolien 33.1 und 33.2.

Der Flüssigkristall in der Polymermatrix wird dann von einer flüssigkristallinen Phase in eine andere umgeschaltet. Sind die Flüssigkristalle in der ersten flüssigkristallinen Phase derart angeordnet, dass ihre Polarisation gekreuzt zu der Polarisationsrichtung der Folien 33.1, 33.2 ist, so erscheint die flüssigkristalline Folie dunkel. Wird durch eine an die leitfähige Beschichtung 31.1, 31.2 angelegte Spannung der Flüssigkristall in einen anderen Polarisationszustand versetzt, der parallel zu demjenigen der Polarisationsfolien 33.1, 33.2 ist, so erscheint die Polymermatrix mit dem eingebetteten Flüssigkristall 22 transparent.

Generell kann man feststellen, dass der Flüssigkristall aufgrund des Umschaltens in eine Struktur verbracht ist, in der die Folie transparent erscheint, so hält der Flüssigkristall diese Struktur, bis die Spannung von den Elektroden genommen wird. Liegt keine Spannung mehr an, so kann dies in einer ersten Ausgestaltung der Erfindung dazu führen, dass die flüssigkristalline Struktur der Folie von einem geordneten transmissiven Zustand in einen ungeordneten Zustand übergeht und somit die Folie wieder trübe erscheint. Soll nunmehr die trübe Folie wieder transparent erscheinen, so wird erneut eine Spannung angelegt und die Ordnung des Flüssigkristalls geändert. Zur Aufrechterhaltung der Ordnung des Flüssigkristalls wird in der Regel fast keine Energie benötigt. Der Stromverbrauch liegt bei weniger als 5 Watt/m², bevorzugt weniger als 3 Watt/m². Das Glas kann somit sehr effektiv von einem transmissiven Element in ein trübes Element geschaltet werden und umgekehrt und dies mit relativ kurzen Schaltzeiten, geringer als 10 Sekunden, insbesondere geringer als 1 Sekunde bei Raumtemperatur. Anstelle von Flüssigkristallen kann die schaltbare Folie auch elektrochrome Stoffe enthalten. Bei elektrochromen Stoffen kann die Folie durch Anlegen einer Spannung von einem transparenten hellen Zustand in einen dunklen Zustand, typischerweise mit dunkelblauer Farbe, umgeschaltet werden.

Des Weiteren ist es möglich, nicht die gesamte Fläche der Röntgenschutzscheibe mit einer transparenten Folie zu überdecken, sondern nur einen Teil derselben. Die ITO-Schicht kann dann entsprechend strukturiert werden. Es wäre dann möglich, an den Randbereichen die Ansteuerelemente selbst auf der Röntgenschutzscheibe beziehungsweise dem Glas anzubringen. In Figur 1a ist das Ansteuerelement 22 gezeigt. Die leitfähige Fläche 30 geht dann über den Bereich 18 hinaus und ist beispielsweise mit Laser gegenüber der leitfähigen Fläche im Bereich 30 getrennt, beispielsweise mit Hilfe von Lasern. Anstelle oder zusätzlich zu der Ansteuerung könnten auch Leuchtmittel außerhalb des Bereiches 18 angeordnet sein. Bei einer derartigen Ausgestaltung wäre eine externe Ansteuerung nicht mehr notwendig. Des Weiteren könnte in den Bereichen, die mit einer elektrisch leitfähigen Folie beschichtet sind, aber die nicht von einer schaltbaren Folie überdeckt sind, wie zuvor erwähnt, Leuchtmittel angeordnet werden, beispielsweise Leuchtdioden. Diese Leuchtdioden könnten dann in dem nicht genutzten Teil über die leitfähige Schicht angesteuert werden, beispielsweise ergebend einen Schriftzug oder eine Information.

Des Weiteren wäre es möglich, in den nicht genutzten Bereich des Röntgenschutzglases, die nicht von der flüssigkristallinen Folie überdeckt sind, eine Streufolie anzuordnen, die beispielsweise dann als Projektionsfolie dienen könnte, auf die mit Hilfe von Rück- oder Vorderprojektion entsprechende Informationen oder auch Bilder dargestellt werden können.

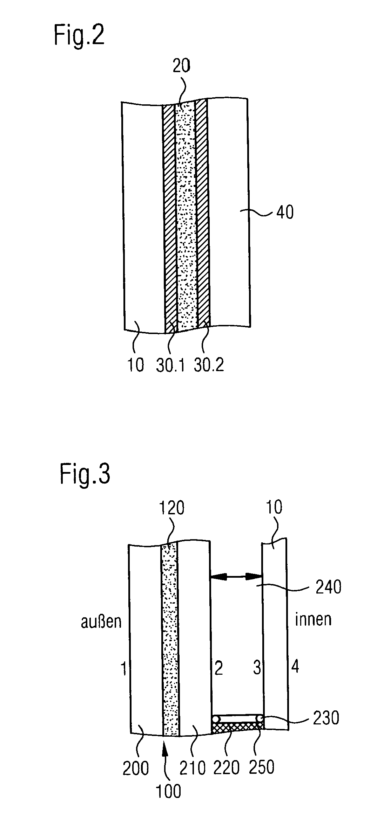

In Figur 2 ist ein Verbundglasaufbau dargestellt, bei dem die flüssigkristalline Folie 20 zwischen die Röntgenschutzscheibe 10 und eine weitere Glasscheibe, das heißt ein weiteres Glaselement 40, einlaminiert ist. Die Folie 10 ist wiederum eine Folie mit Flüssigkristallen wie zuvor beschrieben, die sich von einem Zustand in einen anderen Zustand umschalten lässt. Sowohl auf die Röntgenschutzscheibe 20 wie auch auf die weitere Glasscheibe 40 sind jeweils leitfähige Schichten 30.1, 30.2, bestehend aus Metalloxid aufgebracht. Diese beiden leitfähigen Schichten 30.1, 30.2 wirken dann für die Flüssigkristalle in der Folie 20 wie zwei Elektroden. Das Schalten von Flüssigkristallen, die zwischen zwei Elektroden eingeschlossen sind, ist hinlänglich aus dem Bereich der Flüssigkristallbildschirme bekannt. Bei dem weiteren Glaselement 40 kann es sich um ein Einscheibenglas, ein Einscheibenglas, ein Einscheibensicherheitsglas, ein teilvorgespanntes Einscheibenglas, ein Verbundsicherheitsglas, ein Verbundsicherheitsglas umfassend ein Einscheibensicherheitsglas, ein Verbundsicherheitsglas umfassend ein teilvorgespanntes Glas handeln.

Des Weiteren kann das weitere Glaselement 40 eine beschichtete Scheibe sein, beispielsweise eine entspiegelte Scheibe wie die Glasscheiben AMIRAN® der Schott AG, Mainz, ein vollständig durchgefärbtes Farbeffektglas ARTISTA® oder IMERA® der Schott AG mit strukturierter oder strukturloser Oberfläche sowie ein Farbeffektglas NAMIRA® der Schott AG mit Interferenzbeschichtung. Auch Wärmeschutzgläser und Sonnenschutzgläser wären denkbar.
Wärmeschutzgläser oder Sonnenschutzgläser zeichnen sich durch eine hohe Lichttransmission des Tageslichtes, einen geringen Gesamtenergiedurchlass zur Verhinderung von starken Aufheizungen sowie eine hohe Wärmedämmung zur Verhinderung von Wärmeverlusten auf. Wärmedämmschichten oder Sonnenschutzbeschichtungen sind aus "Dünnfilmtechnologie auf Flachglas" von Hans-Joachim Gläser, Verlag Karl Hofmann, 1999, S. 173-199 offenbart. Der Offenbarungsgehalt dieser Schrift wird in diese Anmeldung vollumfänglich mit einbezogen.

Insbesondere stellt eine elektrisch leitfähige Schicht auf Basis von SnO₂:F-Beschichtung auch eine Wärmedämmschicht dar. Eine aus einem derartigen Material bestehende Beschichtung hat somit sowohl leitfähige Eigenschaften als auch eine Wärmedämmfunktion. SnO₂:F-Beschichtungen werden auch als sogenannte Hard-Coatings bezeichnet.

Das erfindungsgemäße Element lässt sich auch in einem Isolierglaselement einsetzen.

In Figur 3 ist ein derartiges Isolierglaselement dargestellt. Das Isolierglaselement gemäß Figur 3 besteht aus einer Röntgenschutzscheibe 10 sowie einem Verbundglaselement 100. Das Verbundglaselement 100 kann ein konventionelles Verbundglaselement sein oder auch ein solches, bei dem eine Folie 120 mit Flüssigkristallen zwischen die beiden Scheiben in das Verbundglaselement einlaminiert ist. Die beiden Scheiben des Verbundglaselementes 100 sind mit Bezugsziffer 200 beziehungsweise 210 bezeichnet. Der Abstand A zwischen den beiden Elementen, die das Isolierglaselement ausbilden, liegt zwischen 5 und 50 mm, bevorzugt im Bereich zwischen 10 mm - 30 mm, insbesondere bei 16 mm. Der Abstand des Verbundglaselementes 100 und der Röntgenschutzscheibe 210 des Isolierglaselementes wird durch ein Metallstück 220, bevorzugt aus Aluminium, eingehalten. Das Abstandsstück 220 ist gegenüber den beiden scheibenförmigen Elementen 100, 10 abgedichtet, und zwar mit Hilfe eines Dichtmateriales 230, das bevorzugt aus einem Butylkautschuk besteht. Die vollständige Abdichtung des Zwischenraumes 240 zwischen erstem 100 und zweitem 10 scheibenförmigem Element wird durch unterhalb des Abstandselementes 220 aufgebrachten Butylkautschuk 250 erreicht. Zwischen dem ersten und dem zweiten scheibenförmigem Element befindet sich bevorzugt ein gasförmiges Medium. Bei erhöhten thermischen Anforderungen wird hier insbesondere ein Edelgasmedium eingesetzt. Das Edelgasmedium kann beispielsweise die Elemente Argon oder Xenon oder Krypton umfassen.

Das Verbundelement 100, in das die Folie 120 mit Flüssigkristallen einlaminiert ist, kann auf beiden Scheiben eine leitfähige Beschichtung aufweisen, beispielsweise aus einem Metalloxid. Für die Scheiben 200, 210 sind unterschiedliche Zusammensetzungen denkbar. Beispielsweise kann auf die Fläche 2 der Scheibe 210 eine Wärmeschutzschicht oder eine Sonnenschutzschicht aufgebracht sein. Auf Fläche 2 ist die Wärme- oder die Sonnenschutzschicht zum Inneren des Isolierglasverbundes aufgebracht. In Figur 3 ist die für einen Isolierglasverbund übliche Bezeichnung für die Flächen angegeben. Außen bezeichnet die Außenseite der Isolierglasscheibe und Innen die Innenseite. Die Flächen 1 und die Fläche 2 sind die Flächen der Außenscheibe; die Flächen 3 und 4 die Flächen der Scheibe, die der Innenseite zugewandt sind.

Auf die Fläche 1 der Scheibe 200 kann eine Entspiegelungsschicht, beispielsweise eine Interferenzentspiegelungsschicht, aufgebracht sein. Des Weiteren kann die Scheibe 200 beispielsweise ein Farbeffektglas basierend auf Interferenzschichtsystemen oder ein durchgefärbtes Farbeffektschichtglas sein.

Bevorzugt liegt die Röntgenschutzscheibe bei dem Isolierglasverbund innenseitig und das Verbundsicherheitsglas außenseitig. Die Innenseite ist mit "Innen", die Außenseite mit "Außen" beschriftet.

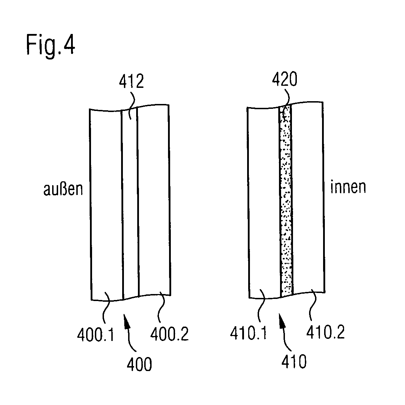

In Figur 4 ist ein Isolierglasverbund, bestehend aus zwei Verbundsglaselementen, dargestellt.

Das Verbundglaselement 400 ist wiederum der Außenseite des Isolierglasverbundes zugewandt, das Element 410 der Innenseite. Gleiche Bauteile wie in Figur 3 sind mit um 200 erhöhten Bezugsziffern bezeichnet. Das Verbundelement 400 besteht aus zwei Scheiben 400.1, 400.2, die entweder mit Hilfe beispielsweise eines Gießharzes oder einer Verbundfolie, beispielsweise einer PVB-Folie 412 zu einem Verbundglaselement zusammengesetzt sind. Die Einzelscheiben des Verbundglaselementes können jedoch unterschiedlichen Anforderungen genügen, beispielsweise entspiegelte Gläser sein oder Gläser mit Wärmedämmbeschichtungen.

Auch sind die Verbundglaselemente nicht auf 2-Scheiben-Verbundgläser beschränkt; selbstverständlich sind auch 3-Scheiben-Verbunde und Verbunde mit noch mehr Gläsern möglich. Die zweite Verbundglasscheibe 410 besteht ebenfalls wieder aus mindestens zwei Scheiben 410.1, 410.2, die vorliegend der Innenseite zugewandt sind. Eine dieser Scheiben ist erfindungsgemäß als Röntgenschutzglas ausgebildet, beispielsweise die Scheibe 410.2. Zwischen die Scheibe 410.1 und 410.2 ist eine Folie 420 mit den Flüssigkristallen gemäß der Erfindung einlaminiert. Die Scheibe 410.1 kann ebenfalls ein Röntgenschutzglas oder ein beliebiges anderes Glas sein.

Mit der Erfindung wird erstmals ein Element angegeben, das sich dadurch auszeichnet, das wenigstens ein Glaselement umfasst, das als Schutzglas gegen ionisierende Strahlung ausgebildet ist sowie Teile dieses Glaselements von einer Folie überdeckt werden, die mit Substanzen, insbesondere Flüssigkristallen ausgestattet sind, so dass durch Schalten der Substanzen, insbesondere Flüssigkristalle das Element im sichtbaren Wellenlängenbereich von einem transparenten Zustand in einen weitgehend intransparenten, beispielsweise einen streuenden Zustand umgeschaltet werden kann. Anstelle von Flüsssigkristallen können die Substanzen auch elektrochrome Stoffe umfassen. Dies ermöglicht Röntgenschutzgläser, die auf einfache Art und Weise in ihrem Transmissionsverhalten verändert werden können. Derartige Scheiben können beispielsweise in Kliniken im Bereich von Röntgenschutzfenstern zum Einsatz kommen, beispielsweise für Untersuchungsräume im Bereich der Mammographie. Gegenüber herkömmlichen Konstruktionen weisen sie eine wesentlich vereinfachte Form auf.

## Patentansprüche

1. Element, umfassend:
wenigstens ein Glaselement (10), das als Schutzglas gegen ionisierende Strahlung und/oder UV-Strahlung ausgebildet ist, wobei wenigstens ein Teil (12) der Fläche des Glaselementes (10) von einer Folie (20) überdeckt wird, die einen Stoff umfasst, der in wenigstens zwei Zustände schaltbar ist.

2. Element gemäß Anspruch 1, **dadurch gekennzeichnet, dass**
das Glaselement (10) ein Röntgenschutzglas ist.

3. Element nach einem der Ansprüche 1 bis 2, **dadurch gekennzeichnet, dass** das Röntgenschutzglas in der Glaszusammensetzung einen Bleigehalt ≥ 60 Gew.-%, bevorzugt > 60 Gew.-%, insbesondere bevorzugt ≥ 65 Gew.-%, ganz besonders bevorzugt > 70 Gew.-% umfasst.

4. Element gemäß einem der Ansprüche 1 bis 3, **dadurch gekennzeichnet, dass** das Röntgenschutzglas eine Transmission ≥ 80 % für Wellenlängen im sichtbaren Bereich von 420 nm bis 780 nm aufweist.

5. Element gemäß einem der Ansprüche 1 bis 4, **dadurch gekennzeichnet, dass** das Glaselement (10) eine Monoscheibe ist.

6. Element gemäß Anspruch 5, **dadurch gekennzeichnet, dass** die Dicke der Monoscheibe 4 - 25 mm, bevorzugt 4 - 10 mm beträgt.

7. Element gemäß einem der Ansprüche 1 bis 6, **dadurch gekennzeichnet, dass** das Glaselement (10) im Bereich einer Röntgenspannung von 40 kV - 200 kV einer Röntgenröhre einen Bleigleichwert von 0,5 mm - 7 mm aufweist.

8. Element gemäß einem der Ansprüche 1 bis 7, **dadurch gekennzeichnet, dass** der Stoff ein elektrochromer Stoff ist.

9. Element gemäß einem der Ansprüche 1 bis 7, **dadurch gekennzeichnet, dass** der Stoff ein flüssigkristalliner Stoff ist.

10. Element gemäß Anspruch 9, **dadurch gekennzeichnet, dass**
der flüssigkristalline Stoff von einem ungeordneten, für sichtbares Licht weitgehend intransparenten streuenden Zustand in einen geordneten, nicht streuenden Zustand und umgekehrt schaltbar ist.

11. Element gemäß Anspruch 9, **dadurch gekennzeichnet, dass** der flüssigkristalline Stoff zwischen zwei Polarisationsfolien eingebracht ist und von einem ersten, hell transparenten Polarisationszustand in einen zweiten, dunkel transparenten Polarisationszustand und umgekehrt schaltbar ist.

12. Element gemäß einem der Ansprüche 10 bis 11, **dadurch gekennzeichnet, dass** das Schutzglas eine transparente, leitende Schicht (30) umfasst.

13. Element nach einem der Ansprüche 1 bis 12, **dadurch gekennzeichnet, dass** das Element ein weiteres Glaselement (40) umfasst, wobei die Folie (20) zwischen das als Schutzglas ausgebildete Glaselement und das weitere Glaselement (40) eingebracht ist, derart, dass sich ein Verbundglaselement ergibt.

14. Element gemäß Anspruch 13, **dadurch gekennzeichnet, dass**
das weitere Glaselement (40) eine Glasscheibe ist, die ausgewählt ist aus einer der nachfolgenden Scheiben:
eine Monoscheibe, die als Schutzglas gegen ionisierende Strahlung ausgebildet ist;
eine entspiegelte Monoscheibe;
eine Verbundglasscheibe;
eine Dekorglasscheibe;
eine Monoscheibe eines Farbeffektglases;
eine Wärmeschutzglasscheibe;
eine Sonnenschutzglasscheibe.

15. Isolierglaselement, umfassend ein Element nach einem der Ansprüche 1 bis 14 sowie wenigstens eine zum Element (1) beabstandet angeordnete weitere Glasscheibe (100).

16. Isolierglaselement nach Anspruch 15, **dadurch gekennzeichnet, dass**
die weitere Glasscheibe (100) eine Glasscheibe ist, die ausgewählt ist aus einer der nachfolgenden Scheiben:
einer Monoscheibe, die als Schutzglas gegen ionisierende Strahlung ausgebildet ist;
eine entspiegelte Monoscheibe;
eine Verbundglasscheibe;
eine Dekorglasscheibe;
eine Monoscheibe eines Farbeffektglases;
eine Wärmeschutzglasscheibe;
eine Sonnenschutzglasscheibe.

17. Isolierglaselement gemäß einem der Ansprüche 15 bis 16, **dadurch gekennzeichnet, dass**
der Abstand A zwischen dem Element und der weiteren Glasscheibe im Bereich 5 - 50 mm liegt.

18. Verwendung eines Elementes oder eines Isolierglaselementes gemäß einem der Ansprüche 1 bis 17 als Schutzglaselement gegen ionisierende Strahlung im medizinischen Bereich.
